Europäisches Patentamt

European Patent Office

Office européen des brevets

(19)

(11) Veröffentlichungsnummer: **0 118 806**
**B1**

(12) **EUROPÄISCHE PATENTSCHRIFT**

(45) Veröffentlichungstag der Patentschrift:
25.11.87

(51) Int. Cl.⁴: **B 23 B 51/00,** B 23 B 51/04

(21) Anmeldenummer: 84101764.3

(22) Anmeldetag: 21.02.84

(54) Bohrwerkzeug mit auswechselbarem Schneideinsatz.

(30) Priorität: 23.02.83 DE 3306209

(43) Veröffentlichungstag der Anmeldung:
19.09.84 Patentblatt 84/38

(45) Bekanntmachung des Hinweises auf die Patenterteilung:
25.11.87 Patentblatt 87/48

(84) Benannte Vertragsstaaten:
AT CH DE FR GB IT LI

(56) Entgegenhaltungen:
EP-A-0 006 972
GB-A-17 961
GB-A-550 306
GB-A-2 063 767
US-A-3 102 442
US-A-4 180 616

(73) Patentinhaber: Faustka, Helmut, Marxzeller Strasse 41, D-7501 Marxzell 4 (DE)

(72) Erfinder: Faustka, Helmut, Marxzeller Strasse 41, D-7501 Marxzell 4 (DE)

(74) Vertreter: Lempert, Jost, Dr.rer.nat., Patentanwälte Dr. Ing. Hans Lichti Dipl.- Ing. Heiner Lichti Dipl.- Phys. Dr.rer.nat. Jost Lempert Durlacher Strasse 31 Postfach 410760, D-7500 Karlsruhe 41 (DE)

LIBER, STOCKHOLM 1987

EP 0 118 806 B1

2

## Beschreibung

### Technishes Gebiet der Erfindung

Die Erfindung bezieht sich auf ein Bohrwerkzeug, welches aus einem Werkzeugschaft mit mindestens einer Spannut und auswechselbaren Schneideinsätzen zusammengesetzt ist.

### Stand der Technik

Bekannte Bohrwerkzeuge dieser Art haben an der Schaftspitze in der Wand der Spannut eine flache Ausnehmung zur Aufnahme des Schneideinsatzes, die zur Schaftseite hin durch einen Rand begrenzt ist. Als auswechselbare Schneideinsätze werden gelochte Wendeschneidplatten in die Ausnehmung so eingesetzt, daß sie mit ihrer schaftseitigen Schmalseite am schaftseitigen Rand der Ausnehmung anliegen und mit Hilfe einer Schraube festgeschraubt, die durch das Loch der Wendeschneidplatte hindurchgeführt wird (DE-OS 25 55 979)

Bei diesen Bohrwerkzeugen kann ein gewisser Mindest-Bohrquerschnitt nicht unterschritten werden, weil gelochte Wendeschneidplatten und andere Hartmetall-Lochplatten nicht unter einer gewissen Größe gefertigt werden können und weil außerdem die Befestigungsschrauben wegen der Beanspruchungen beim Bohren eine gewisse Mindeststärke haben müssen und schließlich das stützende Material des Bohrerschaftes hinter der Wendeschneidplatte eine gewisse Stärke besitzen muß, damit die Befestigungsschraube und auch die Schneidplatte noch genügend Halt finden. Nachteilig ist ferner, daß zur Befestigung der Wendeschneidplatte eine Befestigungsschraube als zusätzliches Befestigungselement verwendet wird. Das Auswechseln der Schneideinsätze ist dadurch umständlich und zeitraubend.

Aus der britischen Patentschrift GB-A-17 961 (1915) ist bereits ein Bohrer bekannt, bestehend aus einem Werkzeugschaft mit Spannut und auswechselbaren Schneideinsätzen aus hochwertigem Spezialstahl, vorzugsweise HSS-Stahl die ohne zusätzliche Befestigungselemente befestigt werden. Bei diesem Bohrer befindet sich an der Schaftseite in der Wand der Spannut eine Ausnehmung zur Aufnahme des Schneideinsatzes, die schaftseitig durch einen Rand begrenzt ist gegen den die schaftseitige Schmalseite des Schneideinsatzes anliegt. Der Schneideinsatz hat an seiner schaftseitigen Schmalseite einen zur Bohrerachse konzentrischen Befestigungszapfen mit seitlichen Anlageflächen, für den sich in der Schaftspitze eine zur Bohrerachse konzentrische Aufnahme befindet mit Anlageflächen entsprechend den Anlaflächen des Befestigungszapfens. Der Befestigungszapfen ist bei dem bekannten Bohrerwerkzeug schlank-konisch ausgebildet. Die Zentralbohrung in der Bohrerspitze ist um den ganzen Umfang geschlossen, so daß der eingesetzte Befestigungszapfen allseits mit Material des Bohrerschaftes umgeben ist.

Dieser bekannte Bohrer hat den Nachteil, daß der Befestigungszapfen wegen der beengten Raumverhältnisse in der Bohrerspitze sehr schlank ausgebildet werden muß. Das führt zu Bruchgefahr wenigstens bei den spröden Werkstoffen wie z. B. Hartmetall, aus denen heutzutage Schneideinsätze hergestellt werden. Überdies wird auch bei schlanker Ausbildung des Befestigungszapfens für die Zentralbohrung und das umgebende Material des Schaftes ein erheblicher Teil des Schaftquerschnittes beansprucht. Dadurch wird der Raum eingeengt, der für die Spannut zur Verfügung steht. Das kann vor allem bei den modernen, mit hohen Schnittgeschwindigkeiten arbeitenden Bohrern zu Störungen beim Abtransport der Späne aus dem Bohrloch führen.

### Kennzeichen der Erfindung

Die Erfindung hat die Aufgabe ein Bohrwerkzeug mit auswechselbaren Schneideinsätzen ohne die Nachteile des bekannten Bohrers zur Verfügung zu stellen.

Diese Aufgabe wird dadurch gelöst, daß die Wand der Aufnahme für den Befestigungszapfen seitlich von der Spannut her angeschnitten ist und der Befestigungszapfen 2 im Zapfenumfang hinterschnittene Anlageflächen besitzt und der Schneideinsatz durch eine Drehung gegen den Bohrdrehsinn A in die Aufnahme einsetzbar ist.

Dieser Schneideinsatz wird etwa von der Winkelmitte der Spannut her mit dem Befestigungszapfen in die Zapfenaufnahme eingesetzt und dann gegen den Bohr-Drehsinn verdreht, bis die Schneidplatten in die Ausnehmungen in der Wand der Spannutz eingefügt sind. Dabei legen sich Anlageflächen des Befestigungszapfens an die Anlageflächen der Zapfenaufnahme an. Beim Bohren wird der Schneideinsatz durch den Befestigungszapfen konzentrisch gehalten. Gegen die Schnittkräfte wird er durch die Hinterwand und den schaftseitigen Rand der Ausnehmung abgestützt. Die Schnittkräfte drücken dabei den Schneideinsatz in seinen Sitz hinein, so daß er gegen alle Beanspruchungen der Bohrarbeit auch ohne zusätzliche Befestigungsmittel absolut fest und sicher sitzt.

Der Befestigungszapfen kann konisch verjüngt, zylindrisch oder schwalbenschwanzförmig ausgebildet sein. Die Zapfenaufnahme des Werkzeugschaftes hat für jede Zapfenform entsprechende Anlageflächen. Der Befestigungszapfen ist im Zapfenumfang hinterschnitten, damit er von der Spannut her seitlich in die Zapfenaufnahme eingesetzt werden kann; bei dem konischen Befestigungszapfen ist diese Hinterschneidung nicht unbedingt erforderlich.

Der konisch verjüngte Befestigungszapfen setzt sich bei geeignetem Konuswinkel selbsthemmend in der Zapfenaufnahme fest. Dadurch wird der Schneideinsatz in seinem Sitz gesichert, daß er nicht herausfallen oder herausgezogen werden kann, wenn der Bohrer aus dem Bohrloch zurückgezogen wird.

Der konisch verjüngte und der zylindrische Befestigungszapfen können ferner am Zapfenende hinter den Anlageflächen verbreitert sein. Die Zapfenaufnahme für diese Befestigungszapfen hat im Inneren hinter den Anlageflächen eine entsprechende Hinterschneidung, in welche die Verbreiterung eingreift. Das sichert den Schneideinsatz ebenfalls gegen ein Herausfallen oder Herausziehen. Die Verbreiterung kann beliebig ausgebildet sein. Sie kann auch dazu dienen, den Schneideinsatz mit seiner schaftseitigen Schmalseite gegen den schaftseitigen Rand der Ausnehmung zu verspannen. Dafür ist es vorteilhaft, wenn sich die Schmalseite des Schneideinsatzes und der Rand der Ausnehmung nur am Bohrerumfang berühren und zum Bohrerinnern hin im Abstand voneinander verlaufen.

Bei einem Schneideinsatz mit schwalbenschwanzförmigem Befestigungszapfen wird die schaftseitige Plattenschmalseite ebenfalls gegen den schaftseitigen Rand der Ausnehmung verspannt und dadurch der Schneideinsatz in seinem Sitz gesichert. Auch hier ist es zweckmäßig, wenn sich die Plattenschmalseite und der Rand der Ausnehmung nur am Bohrerumfang berühren und im Bohrerinnern im Abstand voneinander verlaufen. Ferner kann der schaftseitige Rand der Ausnehmung in Eindrehrichtung leicht ansteigen. Damit wird die Verspannung des Schneideinsatzes beim Eindrehen in den Plattensitz verbessert. Dasselbe Ergebnis erzielt man mit leicht spiralig im Bohr-Drehsinn ansteigenden Anlageflächen des Befestigungszapfens und der Zapfenaufnahme.

Das Bohrwerkzeug dieser Erfindung kann eine oder zwei Hauptschneiden haben.

Das zweischneidige Bohrwerkzeug hat zwei Spannuten, in deren Wand an der Schaftspitze die beiden flachen Ausnehmungen für die Aufnahme der Schneidplatten des Schneideinsatzes rotationssymmetrisch eingearbeitet sind. Zwischen den Spannuten befindet sich die Aufnahme für den Befestigungszapfen. Der einheitliche Schneideinsatz ist zweiflüglig ausgebildet und hat zwei seitliche, von der Bohrerachse ausgehende rotationssymmetrische Schneidplatten mit je einer Hauptschneide und den zugehörigen Nebenschneiden. Die beiden Schneidplatten können durch ein abgewinkeltes Mittelstück gegeneinander versetzt sein.

Das einschneidige Bohrwerkzeug hat nur eine Spannut. Die zur Aufnahme des Schneideinsatzes bestimmte Ausnehmung geht zur Bohrermitte hin in eine zur Bohrerachse konzentrische, angeschnittene Bohrung über, deren Wand als seitliche Anlagefläche für den Schneideinsatz dienen kann. Der Schneideinsatz hat nur eine seitliche, von der Bohrerachse ausgehende Schneidplatte mit einer Hauptschneide und den zugehörigen Nebenschneiden. Auf der gegenüberliegenden Seite der Bohrerachse kann der Schneideinsatz eine seitliche Anlagefläche haben. Die seitliche Schneidplatte kann gegen das zur Bohrerachse konzentrische Mittelstück abgewinkelt sein.

**Kurze Beschreibung der Zeichnungen**

Figur 1 zeigt einen Schneideinsatz für ein zweischneidiges Bohrwerkzeug mit konisch verjüngtem Befestigungszapfen.

Figur 2 zeigt den Schneideinsatz nach Figur 1 von oben.

Figur 3 zeigt die Schaftspitze für den Schneideinsatz nach Figur 1.

Figur 4 zeigt in Draufsicht, für der Schneideinsatz aus Figur 1 in die Schaftspitze aus Figur 3 eingesetzt wird.

Figur 5 zeigt die Schaftspitze mit eingesetztem Schneideinsatz von oben.

Figur 6 zeigt die Schaftspitze mit eingesetztem Schneideinsatz in perspektivischer Darstellung.

Figur 7 zeigt einen Schneideinsatz mit konisch verjüngendem Befestigungszpafen, bei welchem sich das Zapfenende im Anschluß an die Anlageflächen konisch verbreitert.

Figur 8 zeigt die Schaftspitze für den Befestigungszapfen nach Figur 7.

Figur 9 zeigt einen Schneideinsatz mit zylindrischen Anlageflächen und daran anschließend einer wulstförmigen Verbreiterung.

Figur 10 zeigt die Schaftspitze für den Schneideinsatz nach Figur 9.

Figur 11 zeigt die Schaftspitze nach Figur 10 mit eingesetztem Schneideinsatz.

Figur 12 zeigt einen Schneideinsatz mit schwalbenschwanzförmigem Befestigungszapfen.

Figur 13 zeigt die Schaftspitze für den Schneideinsatz nach Figur 12.

Figur 14 zeigt die Schaftspitze nach Figur 13 mit eingesetztem Schneideinsatz.

Figur 15 zeigt einen Schneideinsatz für ein einschneidiges Bohrwerkzeug.

Figur 16 zeigt den Schneideinsatz nach Figur 15 von oben.

Figur 17 zeigt die Schaftspitze für den Schneideinsatz nach Figur 15.

Figur 18 zeigt in Draufsicht, wie der Schneideinsatz nach Figur 15 in die Schaftspitze nach Figur 17 eingesetzt wird.

Figur 19 zeigt die Schaftspitze nach Figur 17 mit eingesetztem Schneideinsatz von oben.

Figur 20 zeigt die Schaftspitze nach Figur 17 mit eingesetztem Schneideinsatz in perspektivischer Darstellung.

## Allgemeine Beschreibung der Erfindung

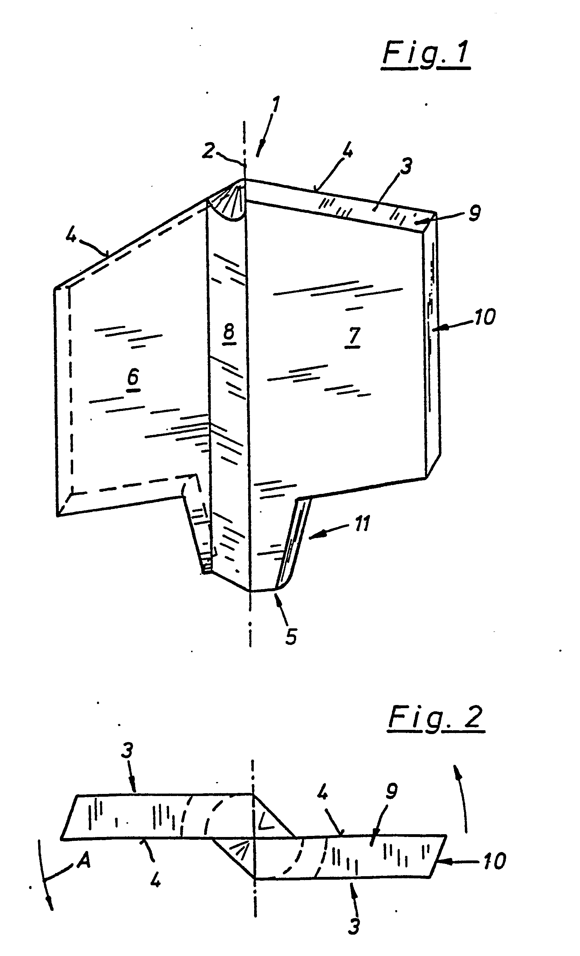

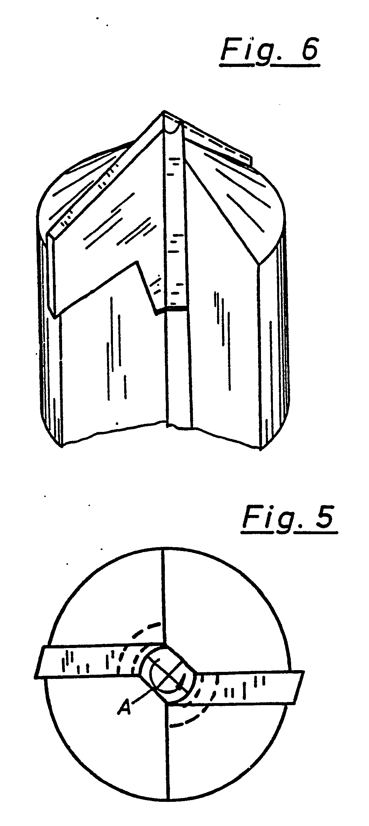

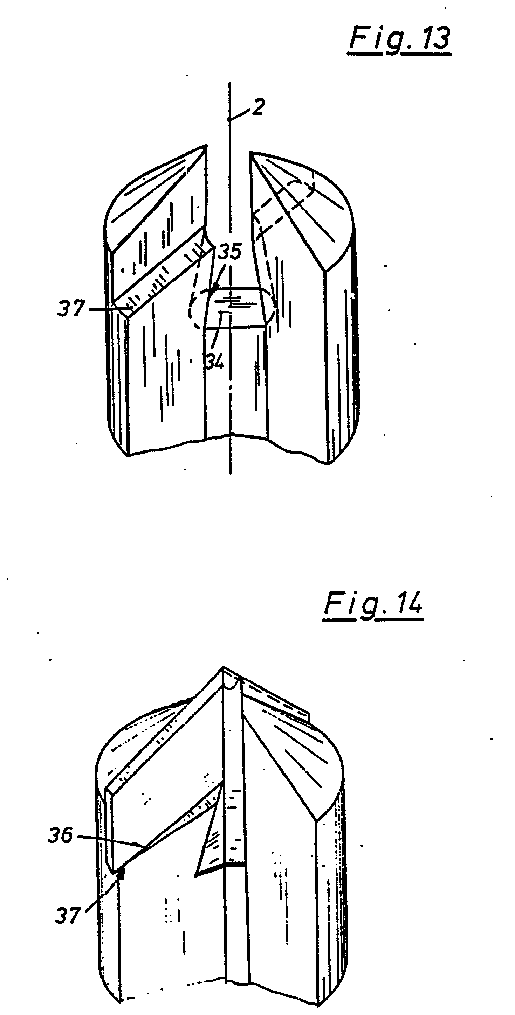

In Figuren 1 bis 14 sind verschiedene Ausführungsformen der Erfindung für zweischneidige Bohrerwerkzeuge dargestellt. Die Grundform der Schneideinsätze für dieses Bohrwerkzeug ist aus Figuren 1 und 2 erkennbar. Der Schneideinsatz (1) hat zwei seitliche Schneidplatten (3) mit je einer Hauptschneide (4) und den zugehörigen Nebenschneiden. Diese Schneidplatten sind zur Bohrerachse (2) rotationssymmetrisch angeordnet. An der Schmalseite des Schneideinsatzes gegenüber der Bohrerspitze befindet sich ebenfalls rotationssymmetrisch zur Bohrerachse (2) der Befestigungszapfen (5). Der Pfeil A gibt den Bohr-Drehsinn an. In Figur 1 sieht man den Schneideinsatz von der Breitseite. Bei der linken Platte blickt man auf die Spanfläche (6), in die nach Bedarf Spanleitstufen eingeformt werden können. Bei der rechten Platte blickt man auf die Rückseite (17), welche im eingesetzten Zustand gegen die Hinterwand (14) der Ausnehmung in der Wand der Spannut anliegt. Außerdem erkennt man bei der rechten Platte die Freifläche (9) der Hauptschneide und die Freifläche (10) der Nebenschneide. Die beiden Schneidplatten sind durch ein abgewinkeltes Mittelstück gegeneinander versetzt, dessen Außenfläche (8) den Übergang von der Spanfläche der linken Platte zur Rückseite der rechten Platte bildet. Der Befestigungszapfen (5) hat bei dieser Ausführungsform zwei konisch zum Zapfenende hin verjüngende seitliche Anlageflächen (11).

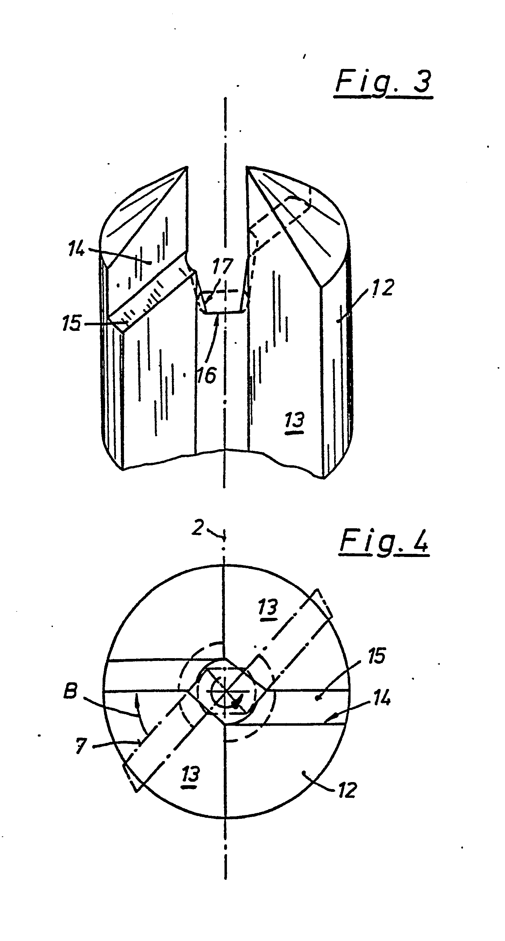

Figur 3 zeigt den Werkzeugschaft für diesen Schneideinsatz. Man blickt in eine Spannut (13). In der linken Wand der Spannut befindet sich an der Schaftspitze die Ausnehmung für die linke Schneidplatte des Schneideinsatzes mit der Hinterwand (14) und dem schaftseitigen Rand (15). Auf der Rückseite des Werkzeugschaftes befindet sich die zweite Spannut, in deren Wand die rotationssymmetrisch gegenüberliegende Ausnehmung für die rechte Schneidplatte des Schneideinsatzes eingearbeitet ist; diese Ausnehmung ist gestrichelt gezeichnet. Zwischen den Spannuten und den Ausnehmungen befindet sich konzentrisch zur Bohrerachse die Aufnahme (16) für den Befestigungszapfen (5). Die Aufnahme hat die beiden seitlichen konischen Anlageflächen (17), die nach Form und Größe den seitlichen Anlageflächen (11) des Befestigungszapfens entsprechen.

Zum Einsetzen wird der Schneideinsatz (1) von oben - um einen Winkel von ca. 45° gegen die Rückwand der Ausnehmung verdreht - mit dem Befestigungszapfen in die Zapfenaufnahme hineingeschoben. Anschließend wird er gegen den Bohr-Drehsinn - in Richtung des Pfeiles B - verdreht, bis die Rückseiten (7) der Schneidplatten an die Hinterwände (14) der Ausnehmungen anliegen (Figuren 4 bis 6). Dabei wird gleichzeitig der Befestigungszapfen so in die Zapfenaufnahme hineingedreht, daß die konischen Anlageflächen (11) des Befestigungszapfens gegen die konischen Anlageflächen (17) der Zapfenaufnahme anliegen. Aufgrund der Keilwirkung und der Reibungskräfte zwischen diesen konischen Anlageflächen wird der Befestigungszapfen selbsthemmend in der Zapfenaufnahme festgehalten. Dadurch kann er weder herausfallen noch herausgezogen werden, wenn der Bohrer aus dem Bohrloch zurückgezogen wird. Der Konuswinkel ist in den Figuren 1 und 3 aus Gründen der Darstellung übertrieben groß gezeichnet. Beispielsweise für einen Werkzeugschaft aus Stahl und Schneideinsätze aus Hartmetall erhält man die gewünschte Selbsthemmung bei Konuswinkeln zwischen 2° und 22°.

Der Befestigungszapfen (5) ist im Zapfenumfang hinterschnitten, damit er besser in die Zapfenaufnahme eingeschoben werden kann und damit er den Spanabfluß nicht behindert. Bei dem konisch verjüngten Befestigungszapfen dieser Ausführungsform ist die Hinterschneidung des Zapfenumfangs nicht unbedingt notwendig.

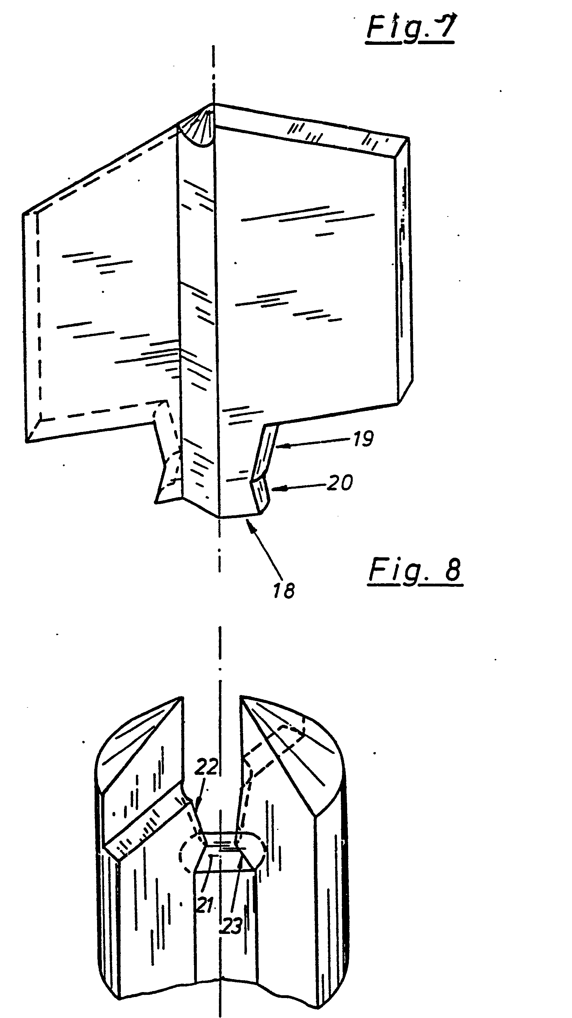

Figuren 7 und 8 zeigen ein Bohrwerkzeug mit einem anderen Befestigungszapfen (18). Am Zapfenende befindet sich im Anschluß an die konisch sich verjüngenden Anlageflächen (19) die konische Verbreiterung (20). Die Zapfenaufnahme (21) des Werkzeugschaftes ist im Anschluß an die Anlageflächen (22) bei (23) konisch hinterschnitten, um die Verbreiterung (20) am Zapfenende aufnehmen zu können. Die konische Verbreiterung (20) sichert den Schneideinsatz gegen ein Herausfallen oder Herausziehen.

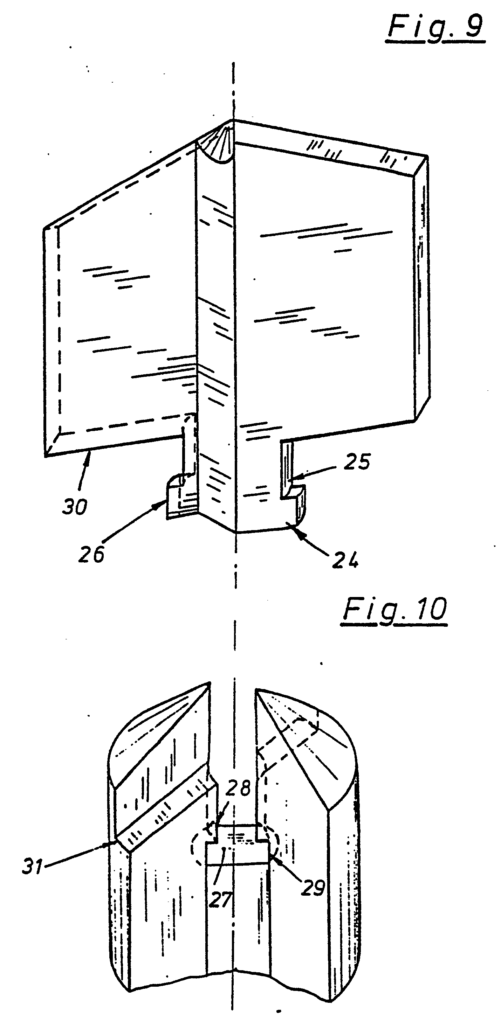

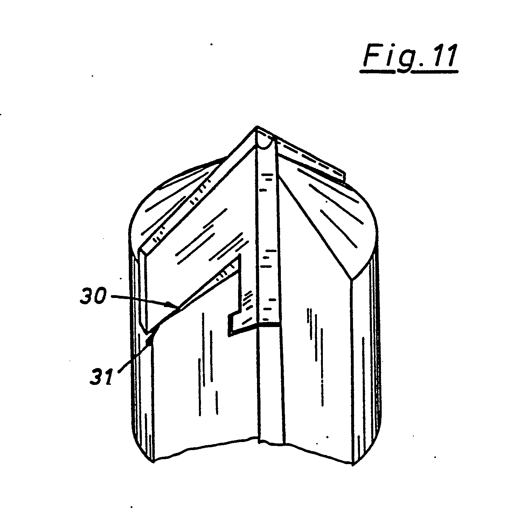

Bei der Ausführungsform nach Figuren 9 bis 11 hat der Schneideinsatz einen Befestigungszapfen (24) mit zylindrischen, im Zapfenumfang hinterschnittenen Anlageflächen (25). Daran anschließend befindet sich am Zapfenende eine wulstförmige Verbreiterung (26). Die Zapfenaufnahme (27) hat zylindrische Anlageflächen (28) und daran anschließend eine Hinterschneidung (29). Die wulstförmige Verbreiterung kann satt an der Hinterschneidung anliegen und die schaftseitige Schmalseite (30) der Schneidplatten gegen den schaftseitigen Rand (31) der Ausnehmung verspannen. Dadurch wird der Schneideinsatz im Werkzeugschaft absolut sicher festgesetzt und gegen ein Herausfallen bzw. Herausziehen gesichert. Diese Verspannung und Sicherung des Schneideinsatzes wird verbessert, wenn sich die Schmalseite (30) und der Rand (31) nur am Bohrerumfang berühren und zum Bohrerinnern hin im Abstand voneinander verlaufen (Figur 11).

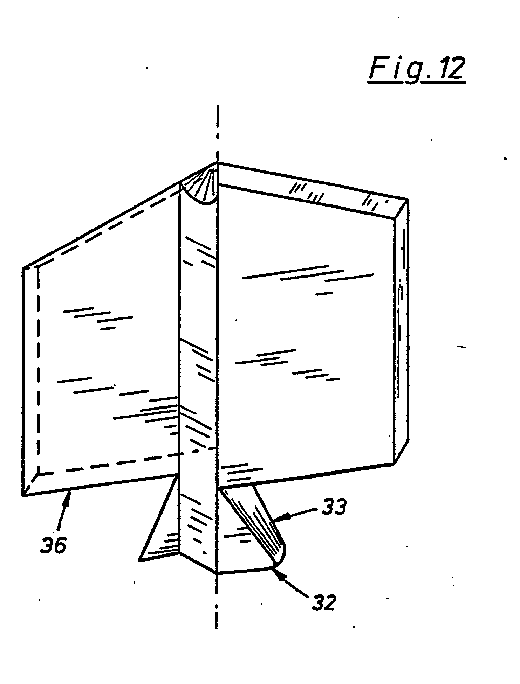

In der Ausführungsform nach Figuren 12 bis 14 ist der Befestigungszapfen (32) schwalbenschwanzförmig ausgebildet mit konischen, im Zapfenumfang hinterschnittenen Anlageflächen (33). Die Zapfenaufnahme (34) hat entsprechende konische Anlageflächen (35). Der eingesetzte Befestigungszapfen verspannt die schaftseitige Schmalseite (36) der Schneidplatten gegen den schaftseitigen Rand (37) der Ausnehmung im Werkzeugschaft und sichert so den Halt des Schneideinsatzes. Auch hier wird der Halt verbessert, wenn sich die Schmalseite (36) und der Rand (37) nur am Bohrerumfang berühren und zum Bohrerinnern hin im Abstand voneinander verlaufen. Ferner kann der schaftseitige Rand der Ausnehmung in Eindrehrichtung leicht ansteigen. Damit wird die Verspannung des Schneideinsatzes beim Eindrehen in den Plattensitz verstärkt. Dasselbe Ergebnis erzielt man, wenn die Anlageflächen (33) des Befestigungszapfens und (35) der Zapfenaufnahme in angenäherter Konusform so ausgebildet werden, daß sie leicht spiralig im Bohr-Drehsinn ansteigen.

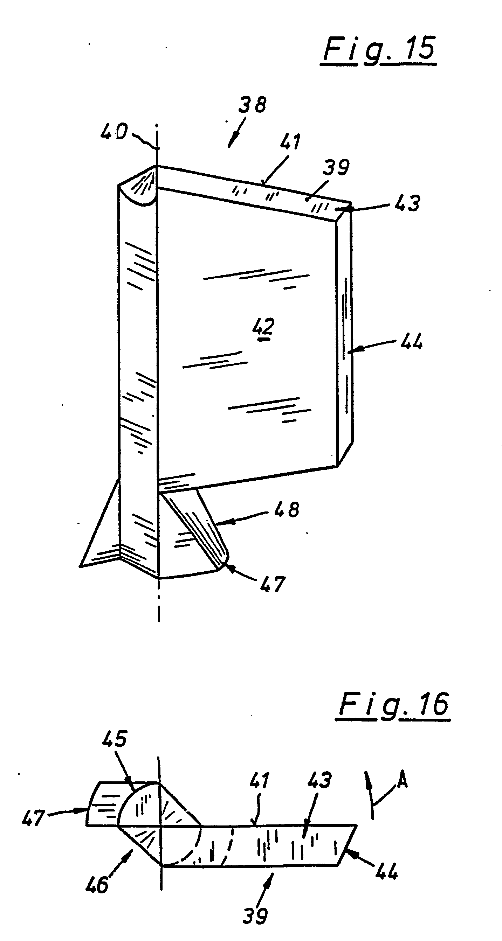

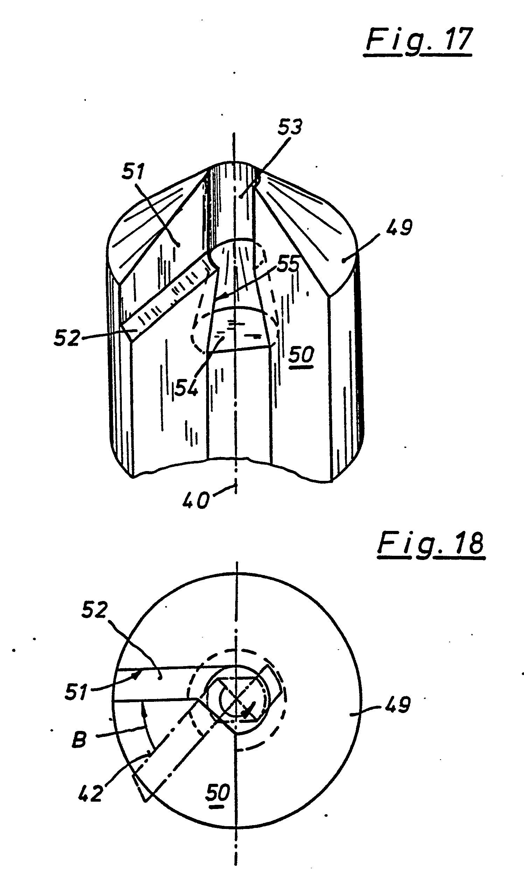

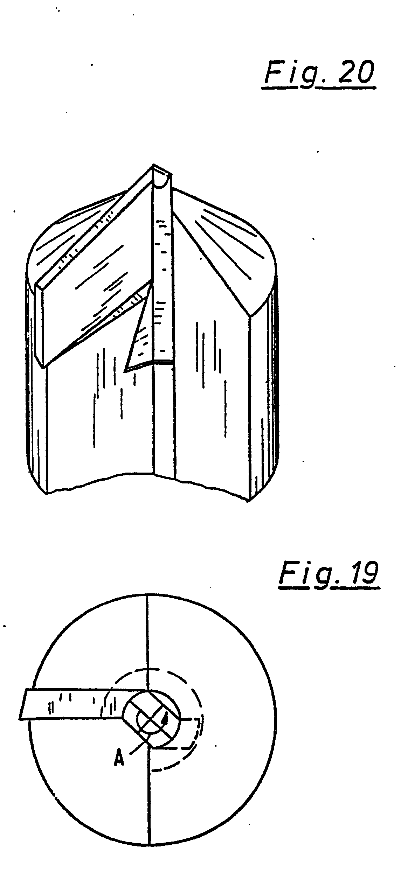

Figuren 15 bis 20 zeigen ein Ausführungsbeispiel für ein einschneidiges Bohrwerkzeug nach dieser Erfindung. Der Schneideinsatz (39) hat nur eine Schneidplatte (39) mit einer Hauptschneide (41), die seitlich von der Bohrerachse (40) ausgeht.

In Figur 15 blickt man auf die Rückseite (42) der Schneidplatte (39) und erkennt außerdem die Freifläche (43) der Hauptschneide und der Freifläche (44) der Nebenschneide. Gegenüber der Schneidplatte hat der Schneideinsatz auf der anderen Seite der Bohrerachse (40) eine seitliche Anlagefläche (45). Dabei kann das "Mittelstück" (46) gegen die Schneidplatte (39) abgewinkelt sein, damit der Schneideinsatz in seinem Sitz besser abgestützt wird. Bei der abgebildeten Ausführungsform ist der Befestigungszapfen (47) schwalbenschwanzförmig mit seitlichen Anlageflächen (48). Ebenso können für den Schneideinsatz des einschneidigen Bohrwerkzeuges auch alle anderen Befestigungszapfen und zugehörigen Zapfenaufnahmen verwendet werden, die in dieser Anmeldung für das zweischneidige Bohrwerkzeug beschrieben wurden.

Der Werkzeugschaft (49) hat nur eine einzige Spannut (50), in deren Wand an der Schaftspitze sich die Ausnehmung für die Schneidplatte (39) des Schneideinsatzes befindet mit einer Rückwand (51) und dem schaftseitigen Rand (52). Die Ausnehmung geht zur Bohrermitte hin in die zentrale Bohrung (53) über, deren Wand als seitliche Stützfläche für die seitliche Anlagefläche (45) des Schneideinsatzes dienen kann. Im Inneren der Bohrung befindet sich die konzentrische Zapfenaufnahme (54). Ihre seitlichen Anlageflächen (55) sind bei diesem Ausführungsbeispiel entsprechend den Anlageflächen (48) des Befestigungszapfens ebenfalls konisch ausgebildet. Der Schneideinsatz des einschneidigen Bohrwerkzeuges wird in der gleichen Weise wie der Schneideinsatz des zweischneidigen Bohrwerkzeuges von der Mitte der Spannut (50) her in den Werkzeugschaft eingesetzt und durch eine Drehung gegen den Bohr-Drehsinn (in Richtung des Pfeiles B) festgesetzt.

**Patentansprüche**

1. Bohrwerkzeug, zusammengesetzt aus einem Werkzeugschaft (12) mit mindestens einer Spannut (13) und einem auswechselbaren Schneideinsatz (1), bei welchem sich

-an der Schaftspitze
-in der Wand der Spannut eine Ausnehmung zur Aufnahme des Schneideinsatzes (1) befindet
-die schaftseitig durch einen Rand (15) begrenzt ist
-gegen den die schaftseitige Schmalseite des Schneideinsatzes anliegt

-und der Schneideinsatz (1)
-an seiner schaftseitigen Schmalseite
-einen zur Bohrerachse (2) konzentrischen
-Befestigungszapfen (5) mit seitlichen Anlageflächen (11) besitzt

-und sich in der Schaftspitze
-eine zur Bohrerachse (2) konzentrische
-Aufnahme (16) für den Befestigungszapfen (5) befindet
-mit Anlageflächen (17) entsprechend zu den Anlageflächen (11) des Befestigungszapfens (5).

dadurch gekennzeichnet, daß
-die Wand der Aufnahme (16) für den Befestigungszapfen (5) seitlich von der Spannut (13) angeschnitten ist
-und der Befestigungszapfen (5) zwei im Zapfenumfang hinterschnittene Anlageflächen (11) besitzt
-und der Schneideinsatz durch eine Drehung gegen den Bohrdrehsinn A in die Ausnehmung einsetzbar ist.

2. Bohrwerkzeug nach Anspruch 1 dadurch gekennzeichnet, daß die Anlageflächen (11) des Befestigungszapfens (5) und die Anlageflächen (17) der Zapfenaufnahme (16) sich zum Zapfenende hin konisch verjüngen.

3. Bohrwerkzeug nach Ansprüchen 1 und 2 gekennzeichnet durch einen Konuswinkel von 2° bis 22°.

4. Bohrwerkzeug nach Anspruch 1 dadurch gekennzeichnet, daß der Befestigungszapfen (24) zwei zylindrische Anlageflächen (25) und die Zapfenaufnahme (27) zwei entsprechende zylindrische Anlageflächen (28) hat.

5. Bohrwerkzeug nach Ansprüchen 2 bis 4 dadurch gekennzeichnet, daß das Zapfenende (18) in Anschluß an die Anlageflächen (19) verbreitert ist (20) und die Zapfenaufnahme (21) am inneren Ende hinter den Anlageflächen (22) entsprechend hinterschnitten ist (23).

6. Bohrwerkzeug nach Anspruch 1 dadurch gekennzeichnet, daß der Befestigungszapfen (32) schwalbenschwanzförmig ausgebildet ist mit zwei konischen, Anlageflächen (33) und die Zapfenaufnahme (34) zwei entsprechende konische Anlageflächen (35) hat.

7. Bohrwerkzeug nach Ansprüchen 5 und 6 dadurch gekennzeichnet, daß die schaftseitige Schmalseite (30) des Schneideinsatzes und der schaftseitige Rand (31) der Ausnehmung sich am Bohrerumfang berühren und zum Bohrerinnern hin im Abstand voneinander verlaufen.

8. Bohrwerkzeug nach Ansprüchen 5 bis 7 dadurch gekennzeichnet, daß der schaftseitige Rand (31, 37) der Ausnehmung in Eindrehrichtung B leicht ansteigt.

9. Bohrer nach Ansprüchen 6 bis 8 dadurch gekennzeichnet, daß die Anlageflächen (33, 35) des Befestigungszapfens (32) und der Zapfenaufnahme (34) von angenäherter Konusform sind und im Bohr-Drehsinn A leicht spiralig ansteigen.

10. Bohrwerkzeug nach Ansprüchen 1 bis 9 dadurch gekennzeichnet, deß der Schneideinsatz (1) zwei rotationssymmetrische, seitlich von der Bohrerachse (2) ausgehende Schneidplatten (3) mit je einer Hauptschneide (4) und der Werkzeugschaft (12) zwei rotationssymmetrisch zur Bohrerachse einander gegenüberliegende Ausnehmungen zur Aufnahme der Schneidplatten besitzt.

11. Bohrwerkzeug nach Ansprüchen 1 bis 9 dadurch gekennzeichnet, daß der Schneideinsatz (38) eine einzige, von der Bohrerachse (40) seitlich ausgehende Schneidplatte (39) mit einer Hauptschneide (41) und auf der gegenüberliegenden Seite der Bohrerachse (40) eine seitliche Anlagefläche (45) besitzt und daß die Ausnehmung in eine zur Bohrerachse konzentrische Bohrung (53) mit einer Anlagefläche für den Schneideinsatz übergeht.

12. Schneideinsatz für Bohrwerkzeuge nach Ansprüchen 1 bis 11 mit seitlich von der Bohrerachse (2) ausgehenden Schneidplatten (3) mit Hauptschneide (4), Nebenschneide und Bohrerspitze und einen an der schaftseitigen Plattenschmalseite angeordneten, zur Bohrerachse (2) konzentrischen Befestigungszapfen (5) mit seitlichen Anlageflächen gekennzeichnet durch zwei in Zapfenumfang hinterschnittene Anlageflächen (11).

13. Schneideinsatz nach Anspruch 12 gekennzeichnet durch zwei zum Zapfenumfang konisch sich verjüngende Anlageflächen (11).

14. Schneideinsatz nach Anspruch 13 gekennzeichnet durch einen Konuswinkel von 2° bis 22°.

15. Schneideinsatz nach Anspruch 12 gekennzeichnet durch zwei zylindrische Anlageflächen (25).

16. Schneideinsatz nach Ansprüchen 12 bis 15 dadurch gekennzeichnet, daß das Zapfenende (18) im Anschluß an die Anlageflächen (19) verbreitert ist (20).

17. Schneideinsatz nach Anspruch 12 gekennzeichnet durch einen schwalbenschwanzförmigen Befestigungszapfen (32) mit zwei konischen Anlageflächen (33).

18. Schneideinsatz nach Anspruch 17 dadurch gekennzeichnet, daß die Anlageflächen (32) des Befestigungszapfens von angenäherter Konusform sind und im Bohr-Drehsinn leicht spiralig ansteigen.

19. Schneideinsatz nach Ansprüchen 12 bis 18 gekennzeichnet durch zwei rotationssymmstrische seitlich von der Bohrerachse (2) ausgehende Schneidplatten (3) mit je einer Hauptschneide (4) und Nebenschneiden.

20. Schneideinsatz nach Anspruch 19 dadurch gekennzeichnet, daß die beiden Schneidplatten (3) durch ein abgewinkeltes Mittelstück mit Seitenflächen gegeneinander versetzt sind.

21. Schneideinsatz nach Ansprüchen 12 bis 18 mit einer einzigen von der Bohrerachse (40) seitlich ausgehenden Schneidplatte (39) mit einer Hauptschneide (41) und mit einer seitlichen Anlagefläche (45) auf der gegenüberlieganden Seite der Bohrerachse (40).

22. Schneideinsatz nach Anspruch 21 dadurch gekennzeichnet, daß die Schneidplatte (39) gegen das zur Bohrerachse (40) konzentrische Mittelstück (45) abgewinkelt ist.

**Claims**

1. Drilling tool, comprising a tool shank (12) with at least one flute (13) and an interchangeable cutting attachment (1), in which on the shank tip there is a recess for receiving the cutting attachment (1) in the wall of the flute, which is bounded by an edge (15) on the shank side and against which engages the shank-side narrow side of the cutting attachment and the cutting attachment (1) is provided on its shank-side narrow side with a fixing pin (5) concentric to the drill axis (2) and having lateral contact faces (11) and in the shank tip is provided a receptacle (16) for fixing pin (5) concentric to drill axis (2) and contact faces (17) corresponding to the contact faces (11) of fixing pin (5), characterized in that the wall of receptacle (16) for fixing pin (5) is laterally cut by the flute and the fixing pin (5) has two contact faces (11) undercut in the pin circumference and the cutting attachment can be inserted in the recess by rotation counter to the drill rotation direction A.

2. Drilling tool according to claim 1, characterized in that the contact faces (11) of fixing pin (5) and the contact faces (17) of pin receptacle (16) conically taper towards the pin end.

3. Drilling tool according to claims 1 and 2, characterized by a cone angle of 2 to 22°.

4. Drilling tool according to Claim 1, characterized in that the fixing pin (24) has two cylindrical contact faces (25) and the pin receptacle (27) two corresponding, cylindrical contact faces (28).

5. Drilling tool according to claims 2 to 4, characterized in that the pin end (18) is widened (20) following on to the contact faces (19) and at the inner end behind contact faces (22), pin receptacle (21) is correspondingly undercut (23).

6. Drilling tool according to claim 1, characterized in that the fixing pin (32) is dovetailed and has two conical contact faces (33), whilst the pin receptacle (34) has two corresponding, conical contact faces (35).

7. Drilling tool according to claims 5 and 6, characterized in that the shank-side narrow side (30) of the cutting attachment and the shank-side edge (31) of the recess are in contact on the drill circumference and are spaced from one another towards the drill interior.

8. Drilling tool according to claims 5 to 7, characterized in that the shank-side edge (31, 37) of the recess rises slightly in the cutting direction B.

9. Drilling tool according to claims 6 to 8, characterized in that the contact faces (33, 35) of fixing pin (32) and pin receptacle (35) have an approximately conical shape and rise slightly spirally in the drill rotation direction A.

10. Drilling tool according to claims 1 to 9, characterized in that the cutting attachment (1) has two rotationally symmetrical tool bits (3) passing laterally out of the drill axis (2) and having in each case one primary cutting edge (4) and the tool shank (12) has two recesses rotationally symmetrical to the drill axis and which face one another for receiving the tool bits.

11. Drilling tool according to claims 1 to 9, characterized in that the cutting attachment (38) has a single tool bit (39) passing laterally out of the drill axis (40) and having a main cutting edge (41) and a lateral contact face (45) on the opposite side of the drill axis (40) and that the recess passes into a hole (53) concentric to the drill axis and having a contact face for the cutting attachment.

12. Cutting attachment for drilling tools according to claims 1 to 11 with tool bits (3) passing laterally from the drill axis (2) and having a main cutting edge (4), secondary cutting edge and drill point and a fixing pin (5) with lateral contact faces concentric to the drill axis (2) and located on the shank-side bit narrow side, characterized by two contact faces (11) undercut in the pin circumference.

13. Cutting attachment according to claim 12, characterized by two contact faces (11) tapering conically towards the pin circumference.

14. Cutting attachment according to claim 13, characterized by a cone angle of 2 to 22°.

15. Cutting attachment according to claim 12, characterized by two cylindrical contact faces (25).

16. Cutting attachment according to claims 12 to 15, characterized in that the pin end (18) is widened (20) following on to the contact faces (19).

17. Cutting attachment according to claim 12, characterized by a dovetailed fixing pin (32) with two conical contact faces (33).

18. Cutting attachment according to claim 17, characterized in that the contact faces (32) of the fixing pin have an approximately conical shape and rise slightly spirally in the drilling rotation direction.

19. Cutting attachment according to claims 12 to 18, characterized by two rotationally symmetrical drill bits (3) passing laterally out of the drill axis (2) and having in each case a primary cutting edge (4) and secondary cutting edges.

20. Cutting attachment according to claim 19, characterized in that the two bits (3) are reciprocally displaced by a tent centre piece with lateral faces.

21. Cutting attachment according to claims 12 to 18 with a single tool bit (39) passing laterally from the drill axis (40) and having a main cutting edge (41) and with a lateral contact face (45) on the opposite side of drill axis (40).

22. Cutting attachment according to claim 21, characterized in that the tool bit (39) is bent against the centre piece (46) concentric to drill axis (40).

**Revendications**

1. Outil de perçage composé d'une tige d'outil (12) avec au moins une rainure à copeaux (13) et une insertion de coupe (1), comportant, à l'extrémité de la tige, dans la paroi de la rainure à copeaux, un évidement pour la mise en place de l'insertion de coupe (1) lequel est délimité, du côté tige, par un bord (15) contre lequel s'applique le chant côté tige de l'insertion de coupe, l'insertion de coupe (1) étant munie, sur son chant du côté tige, d'un nez de fixation (5) concentrique par rapport à l'axe du foret (2), avec des surfaces d'appui latérales (11); et l'extrémité de la tige comprenant un logement (16) pour le nez de fixation (5) disposé concentriquement par rapport à l'axe du foret (2), avec des surfaces d'appui (17) correspondant aux surfaces d'appui (11) du nez de fixation (5), caractérisé en ce que la paroi du logement (16) pour le nez de fixation (5) est entamée latéralement par la rainure à copeaux (13); que le nez de fixation (5) comprend deux surfaces d'appui (11) contre-dépouillées sur la circonférence du nez; et que l'insertion de coupe peut être engagée dans le logement par une rotation en sens inverse du mouvement de rotation de perçage A.

2. Outil de perçage selon la revendication 1, caractérisé en ce que la surface d'appui (11) du nez de fixation (5) et les surfaces d'appui (17) du logement du nez (16) diminuent coniquement en direction de l'extrémité du nez.

3. Outil de perçage selon l'une des revendications 1 ou 2, caractérisé par un angle de cône de 2° à 22°.

4. Outil de perçage selon la revendication 1, caractérisé en ce que le nez de fixation (24) présente deux surfaces d'appui cylindriques (25) et que le logement du nez (27) est muni de deux surfaces d'appui cylindriques (28) associées.

5. Outil de perçage selon l'une quelconque des revendications 2 à 4, caractérisé en ce que l'extrémité du nez (18) présente un élargissement (20) à la suite des surfaces d'appui (19) et que le logement du nez (21) présente une contre-dépouille (23) correspondante à l'extrémité intérieure, à la suite des surfaces d'appui (22).

6. Outil de perçage selon la revendication 1, caractérisé en ce que le nez de fixation (32) est conformé en queue d'aronde avec deux surfaces d'appui coniques (33) et que le logement du nez (34) présente deux surfaces d'appui coniques (35) associées.

7. Outil de perçage selon l'une des revendications 5 et 6, caractérisé en ce que le chant (30) du côté tige de l'insertion de coupe et le bord (31) du côté tige de l'évidement se touchent sur la circonférence du foret et s'étendent à distance l'un de l'autre en direction de l'intérieur du foret.

8. Outil de perçage selon l'une quelconque des revendications 5 à 7, caractérisé en ce que le bord (31, 37) du côté tige de l'évidement monte légèrement dans le sens de rotation B.

9. Outil de perçage selon l'une quelconque des revendications 6 à 8, caractérisé en ce que les surfaces d'appui (33, 35) du nez de fixation (32) et du logement du nez (34) présentent une forme approximativement conique et qu'elles montent légèrement de manière hélicoïdale dans le sens de rotation du perçage A.

10. Outil de perçage selon l'une quelconque des revendications 1 à 9, caractérisé en ce que l'insertion de coupe (1) comporte deux plaquettes de coupe (3) avec chacune un tranchant principal (4) disposées à symétrie de révolution et partant latéralement de l'axe du foret (2), et que la tige d'outil (12) est munie de deux logements pour la mise en place des plaquettes de coupe, disposés à symétrie de révolution et en face l'un de l'autre.

11. Outil de perçage selon l'une quelconque des revendications 1 à 9, caractérisé en ce que l'insertion de coupe (38) comporte une seule plaquette de coupe (39) avec un seul tranchant principal (41) qui part latéralement de l'axe du foret (40), qu'elle présente, de l'autre côté de l'axe du foret (40), une surface d'appui latérale (45), et que l'évidement se transforme en un alésage (53) concentrique par rapport à l'axe du foret, avec une surface d'appui pour l'insertion de coupe.

12. Insertion de coupe pour des outils de perçage selon l'une quelconque des revendications 1 à 11, comportant des plaquettes de coupe (3) avec tranchant principal (4), tranchant secondaire et pointe de foret qui s'étendent latéralement à partir de l'axe du foret (2), et un nez de fixation (5) avec des surfaces d'appui latérales disposé sur le chant de la plaquette du côté tige et concentriquement par rapport à l'axe du foret (2), caractérisée en ce qu'elle comporte deux surfaces d'appui (11) contre-dépouillées sur la circonférence du nez.

13. Insertion de coupe selon la revendication 12, caractérisée en ce qu'elle comporte deux surfaces d'appui (11) avec diminution conique en direction de la circonférence du nez.

14. Insertion de coupe selon la revendication 13, caractérisée en ce qu'elle présente un angle de cône compris entre 2° et 22°.

15. Insertion de coupe selon la revendication 12, caractérisée en ce qu'elle comporte deux surfaces d'appui cylindriques (25).

16. Insertion de coupe selon l'une quelconque des revendications 12 à 15, caractérisée en ce que l'extrémité du nez (18) présente un élargissement (20) qui fait suite aux surfaces d'appui (19).

17. Insertion de coupe selon la revendication 12, caractérisée en ce qu'elle comprend un nez de fixation (32) conformé en queue d'aronde avec deux surfaces d'appui coniques (33).

18. Insertion de coupe selon la revendication 17, caractérisée en ce que les surfaces d'appui (32) du nez de fixation présentent une forme approximativement conique et qu'elles montent légèrement de manière hélicoïdale dans le sens de rotation du perçage.

19. Insertion de coupe selon l'une quelconque des revendications 12 à 18, caractérisée en ce qu'elle comprend deux plaquettes de coupe (3) avec respectivement un tranchant principal (4) et des tranchants secondaires qui sont disposées à symétrie de révolution et s'étendent latéralement à partir de l'axe du foret (2).

20. Insertion de coupe selon la revendication 19, caractérisée en ce que les deux plaquettes de coupe (3) sont décalées l'une par rapport à l'autre par l'intermédiaire d'une partie centrale coudée avec des faces latérales.

21. Insertion de coupe selon l'une quelconque des revendications 12 à 18 avec une seule plaquette de coupe (39) s'étendant latéralement à partir de l'axe du foret (40) et présentant un tranchant principale (41), et avec une surface d'appui latérale (45) située de l'autre côté de l'axe du foret (40).

22. Insertion de coupe selon la revendication 21, caractérisée en ce que la plaquette de coupe (39) est coudée par rapport à la partie centrale (46) disposée concentriquement par rapport à l'axe du foret (40).

_Fig. 1_

_Fig. 2_

0 118 806

*Fig. 3*

14

17

15

16

12

*13*

*Fig. 4*

2

*13*

15

B

14

7

*13*

12

3

_Fig. 6_

_Fig. 5_

A

_Fig. 7_

_Fig. 8_

—19

—20

18

22

21

23

7

_Fig. 9_

_Fig. 10_

_Fig.11_

30

31

_Fig.12_

_Fig. 13_

_Fig. 14_

_Fig. 15_

_Fig. 16_

_Fig. 17_

_Fig. 18_

*Fig. 20*

*Fig. 19*